# EUROPEAN PATENT APPLICATION

(11) **EP 1 845 006 A2**
(43) Date of publication of application: **17.10.2007**
(21) Application number: 07251435.9
(22) Date of filing: 30.03.2007
(51) Int. Cl.: B62D 1/19

(54) **Steering wheel retracting device for vehicle**

(30) Priority: 13.04.2006 US 403765
(71) Applicant: Fong, Jian-Jhong, Changhua City, Changhua County 500 (TW)
(72) Inventor: Fong, Jian-Jhong, Changhua City, Changhua County 500 (TW)
(74) Representative: Powell, Timothy John

(57) **Abstract**

A steering wheel retracting device (10) includes a steering wheel (88) of a vehicle (80) and a moving device for moving the steering wheel (88) relative to the vehicle (80) to selectively move the steering wheel (88) away from a driver in a car accident. A cylinder housing (11) may be attached to the vehicle (80). A shaft (20) is inserted through the cylinder housing (11) for coupling the steering wheel (88) to front wheels (82) of the vehicle (80). A piston rod (40) is movably mounted on the shaft (20). A piston (41) is connected to the piston rod (40) and movably disposed in the cylinder housing (11). An actuator (50) is coupled to the cylinder housing (11) for selectively moving the piston (41) relative to the cylinder housing (11) to move the steering wheel (88) away from the driver.

## Description

### BACKGROUND OF INVENTION

### 1. FIELD OF INVENTION

The present invention relates to a device for retracting a steering wheel of a vehicle when the vehicle hits or is hit by another object, and thus preventing a driver of the vehicle from hitting the steering wheel in a car accident.

### 2. RELATED PRIOR ART

Various kinds of typical shock and energy dissipating devices or assemblies have been developed and attached to various vehicles for absorbing and dissipating hits or shocks that may be transmitted to drivers or passengers and for protecting the drivers or passengers from injuries.

For example, various kinds of typical shock and energy dissipating devices have been developed and attached to the bumpers or the other portions of the vehicles for absorbing and dissipating the hits or shocks that may be transmitted to the drivers or passengers.

However, in a car accident, i.e., when the vehicle hits or is hit by another obj ect, the driver may be violently or seriously hit the steering wheel due to the moment of inertia so that the driver may be serious hurt in the car accident.

For preventing the driver from hitting the steering wheel and for protecting the driver and/or passengers, air bags have been provided in vehicles for inflation in car accidents.

However, in car accidents, air bags are quickly inflated by explosive air or other explosive gases, and the quick or sudden inflation of the air bags exert great forces against drivers and/or passengers so that the drivers and/or passengers might be hurt by the air bags.

In addition, it is to be noted that the steering wheel is located right in front of the driver and located very close to the driver, and the distance between the steering wheel and the driver is too short for the inflation of the air bags so that the quick or sudden inflation of the air bags may exert a great force against the driver and may cause internal injury to the driver.

The present invention is therefore intended to obviate or at least alleviate the problems encountered in prior art.

### SUMMARY OF INVENTION

The primary objective of the present invention to provide a steering wheel retracting device for attachment to a vehicle and for retracting the steering wheel of the vehicles and/or for moving the steering wheel away from the driver when the vehicle hits or is hit by another object, thus preventing the driver from hitting the steering wheel in a car accident.

In accordance with an aspect of the present invention, a steering wheel retracting device includes a steering wheel provided in a vehicle and means for moving the steering wheel relative to the vehicle to move the steering wheel away from a driver in a car accident, thus preventing the driver from quickly hitting the steering wheel, and dissipating a force that might be exerted on the steering wheel by the driver.

The moving means includes a cylinder housing and a shaft. The cylinder housing is attached to the vehicle and includes a chamber defined therein. The shaft is inserted through the chamber of the cylinder housing and formed with an upper portion attached to the steering wheel. The cylinder housing includes at least one bearing provided between the cylinder hosing and the shaft.

The shaft comprises a bore defined therein. A coupling device inserted through the bore for coupling the steering wheel to front wheels of the vehicle. The coupling device includes a link inserted through the bore and formed with an upper portion connected to the steering wheel. The shaft includes at least one guiding rib inserted into the bore. The link includes at least one guiding rib formed on the upper portion and engaged with the guiding rib of the shaft so that the link can be rotated by the shaft.

The moving means includes a piston rod, a piston and an actuator. The piston rod is movably mounted on the shaft. The piston is connected to the piston rod and movably disposed in the chamber of the cylinder housing, thus separating the chamber of the cylinder housing into a first space and a second space. The actuator is coupled to the second space of the cylinder housing for selectively moving the piston relative to the cylinder housing.

A bearing device may be provided between the piston rod and the shaft for rotationally coupling the piston rod to the shaft but preventing axial movement of the piston rod relative to the shaft. The bearing device includes at least one thrust bearing or needle bearing provided between the piston rod and the shaft. A retaining ring may be provided between the piston and the shaft for rotationally coupling the piston rod to the shaft.

The moving means includes at least one latch for coupling the piston rod to the vehicle so that the latch is selectively released when the piston rod is moved relative to the cylinder housing. The moving means includes a frame attached to the vehicle for supporting the latch.

The actuator includes a piston rod operable to transmit pressurized fluid into the second space of the cylinder housing. At lest one check valve and/or relief valve is provided between the cylinder housing and the actuator.

The moving means includes an actuating device including a piston rod coupled to the cylinder housing for selectively moving the cylinder housing and the steering wheel away from the driver. The moving means includes a frame attached to the vehicle for supporting the actuating device. The actuator coupled to the actuating device for selectively actuating the actuating device to move the cylinder housing and the steering wheel away from the driver.

Other objectives, advantages and features of the present invention will become apparent from the following description referring to the attached drawings.

### BRIEF DESCRIPTION OF DRAWINGS

The present invention will be described via detailed illustration of three embodiments referring to the drawings in which:
Fig. 1 is a partial cross-sectional view of a steering wheel retracting device used in vehicle in accordance with the first embodiment of the present invention;
Fig. 2 is an enlarged partial cross-sectional view of the steering wheel retracting device shown in Fig. 1;
Fig. 3 is a further enlarged partial cross-sectional view of the steering wheel retracting device shown in Fig. 2;
Fig. 4 is a partial perspective of the steering wheel retracting device shown in Fig. 1;
Fig. 5 is a partial exploded view of the steering wheel retracting device shown in Fig. 4;
Fig. 6 is a partial cross-sectional view similar to Fig. 1, illustrating the operation of the steering wheel retracting device;
Fig. 7 is an enlarged partial cross-sectional view similar to Fig. 2, illustrating the operation of the steering wheel retracting device;
Fig. 8 is a partial perspective view of a steering wheel retracting device according to the second embodiment of the present invention; and
Fig. 9 is a partial perspective view of a steering wheel retracting device according to the third embodiment of the present invention.

### DETAILED DESCRIPTION OF EMBODIMENTS

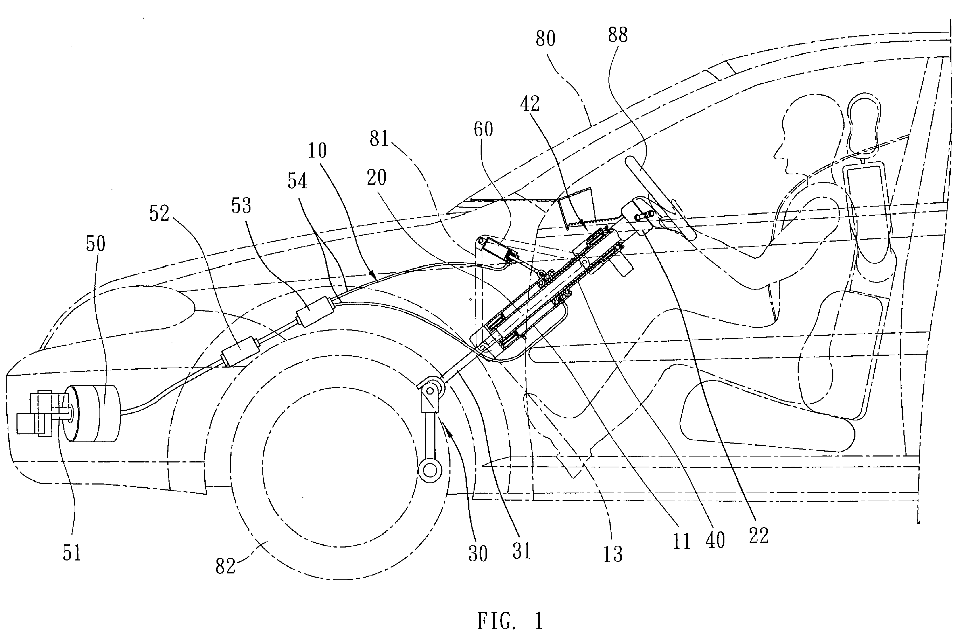

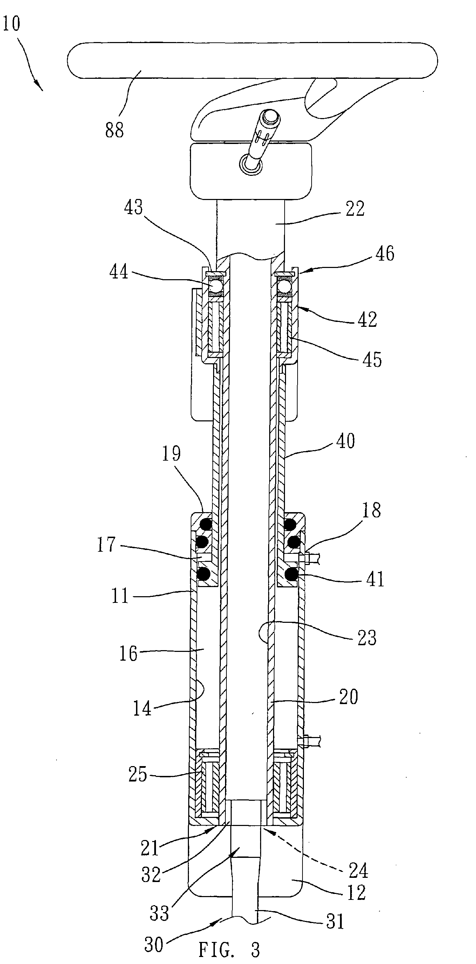

Referring to the drawings and, initially, to Figs. 1 through 5, in accordance with the present invention, a steering wheel retracting device 10 is attached to a vehicle 80 such as attached to a steering wheel 88 of the vehicle 80 for selectively retracting the steering wheel 88 of the vehicle when the vehicle 80 hits or is hit by another object, thus preventing a driver from hitting the steering wheel 88 in the car accident. The vehicle 80 may further include a frame 81 disposed therein in front of the driver for supporting the steering wheel retracting device 10.

The steering wheel retracting device 10 includes a cylinder housing 11 secured to the vehicle 80. For example, the cylinder housing 11 includes a base member 12 secured to the vehicle 80 such as secured to the frame 81 of the vehicle 80 with one or more fasteners 13. The cylinder housing 11 includes a chamber 14 defined therein. A shaft 20 is rotationally and movably inserted through the chamber 14 of the cylinder housing 11, and includes a lower portion 21 extensible out of the chamber 14 of the cylinder housing 11 and an upper portion 22 secured to the steering wheel 88 of the vehicle 80, for allowing the steering wheel 88 and the shaft 20 to be rotated and moved downwards relative to the cylinder housing 11 and the vehicle 80.

The shaft 20 includes a bore 23 defined therein and one or more guiding ribs 24 formed in the lower portion 21 thereof and extending into the bore 23 thereof. One of more bearings 25 may be provided between the cylinder housing 11 and the lower portion 21 of the shaft 20 for allowing the rotation and downward movement of the shaft 20 relative to the cylinder housing 11. A typical coupling device 30 is coupled to the front wheels 82 of the vehicle 80 for controlling or maneuvering or steering the front wheels 82. The coupling device 30 includes a link 31 of coupling to the shaft 20, and includes one or more guiding ribs or teeth 32 formed or provided on the upper portion 33 thereof for engagement with the guiding ribs 24 of the shaft 20 and for allowing the controlling or maneuvering or steering or rotation of the front wheels 82 by the steering wheel 88. The upper portion 33 of the link 31 can thus be partially inserted in the bore 23 of the shaft 20. The coupling device 30 is typical and will not be described in detail.

In operation, as shown in Figs. 1 through 3, when the guiding ribs or teeth 32 of the link 31 of the coupling device 30 are engaged with the guiding ribs 24 of the shaft 20, the front wheels 82 may be controlled or maneuvered or steered or rotated by the steering wheel 88. This condition may occur when the steering wheel 88 and the shaft 20 have been retracted or moved downwards relative to the cylinder housing 11 and the vehicle 80.

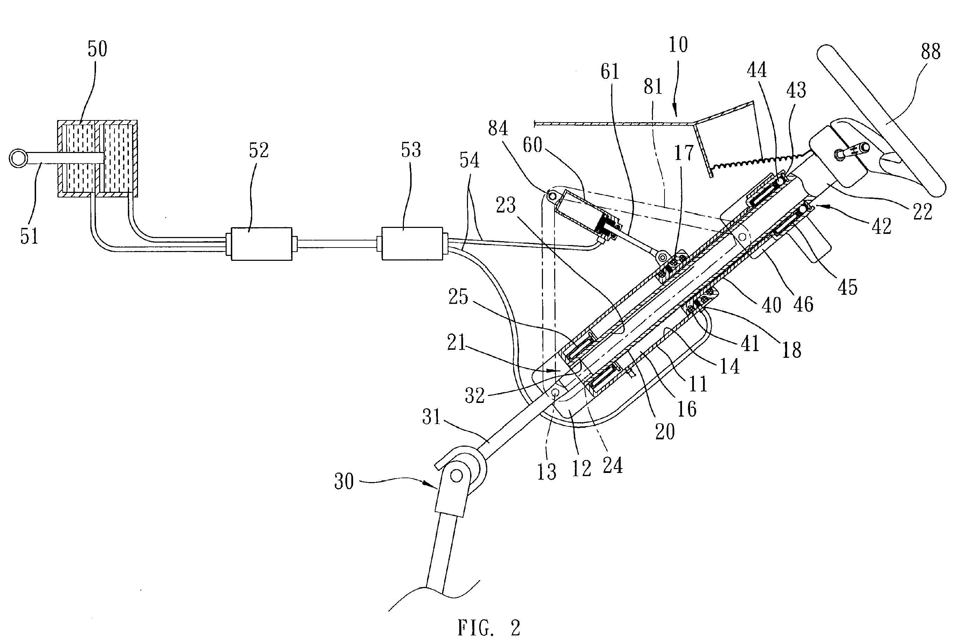

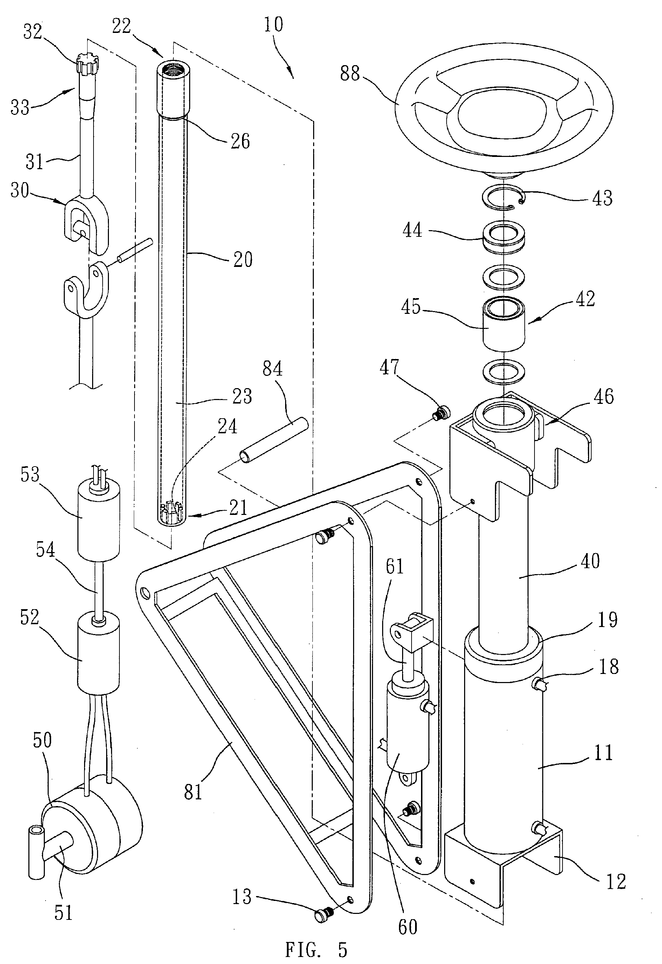

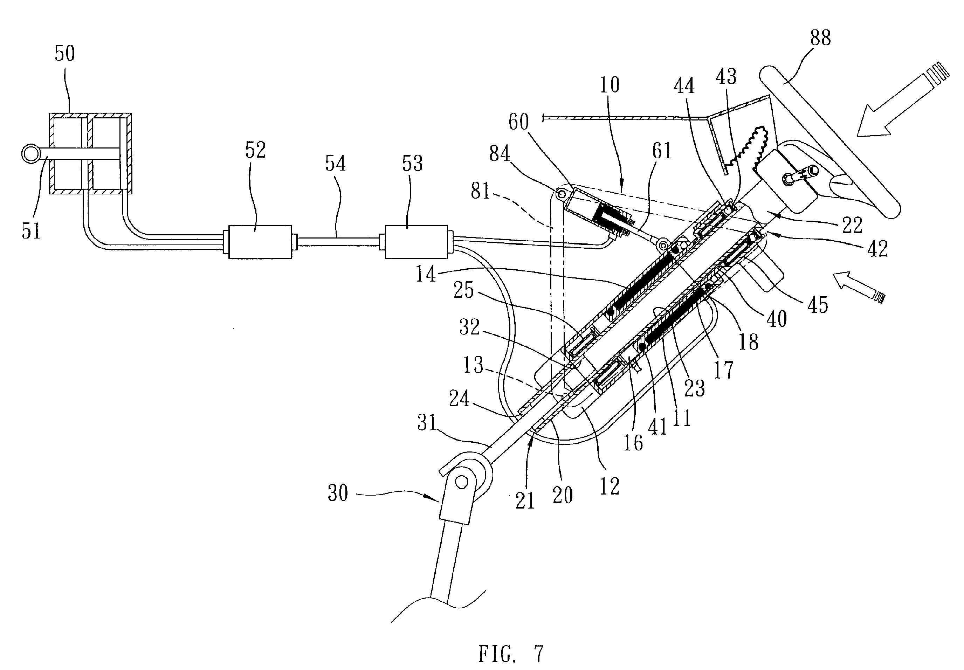

A piston rod 40 is movably mounted on the shaft 20. A piston 41 is formed at a lower portion of the piston rod 40. The piston 41 is movable in the chamber 14 of the cylinder housing 11 for separating the chamber 14 of the cylinder housing 11 into a first space 16 and a second space 17 (Figs. 2, 3 and 7). A bearing device 42 is provided between an upper portion 46 of the piston rod 40 and the upper portion 22 of the shaft 20. The bearing device 42 includes a clamping or retaining ring 43 provided between the piston rod 40 and the shaft 20 for rotationally coupling the piston rod 40 to the shaft 20 but for preventing the longitudinally or axial movement of the piston rod 40 relative to the shaft 20. A peripheral groove 26 (Fig. 5) may be defined in the upper portion 22 of the shaft 20 for receiving the clamping or retaining ring 43.

The bearing device 42 may include one or more thrust bearings 44 and/or one or more needle bearings 45 provided between the piston rod 40 and the shaft 20 for facilitating the rotation of the piston rod 40 on the shaft 20 but for preventing the longitudinal or axial movement of the piston rod 40 on the shaft 20. In operation, when the front wheels 82 are controlled or maneuvered or steered or rotated by the steering wheel 88 and the shaft 20, the shaft 20 may be rotated relative to the cylinder housing 11 and the vehicle 80, and the rotation of the piston rod 40 relative to the cylinder housing 11 and the vehicle is not required.

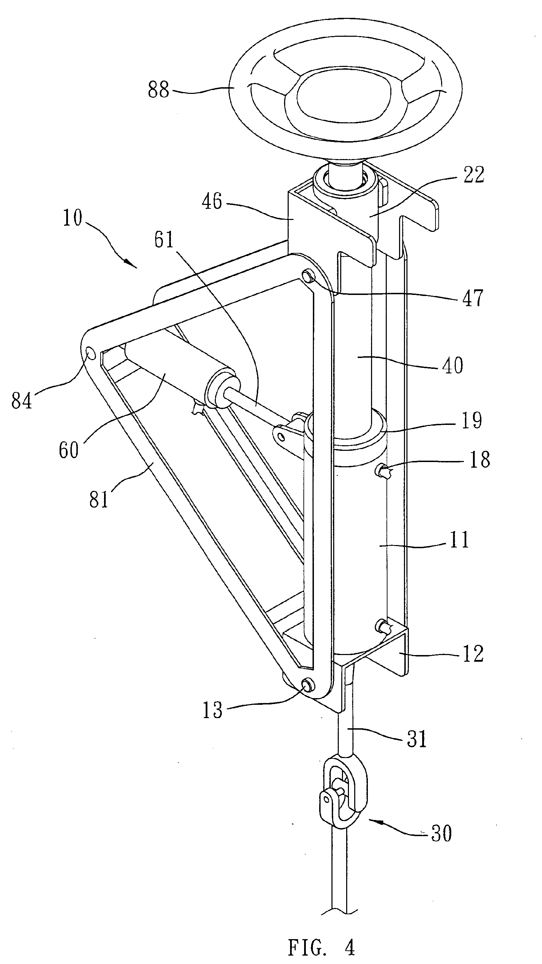

The upper portion 46 of the piston rod 40 may be temporarily coupled to the frame 81 of the vehicle 80 with one or more latches 47 for example (Figs. 4 and 5). The breakable latches 47 may be selectively released when the piston rod 40 and the steering wheel 88 and the shaft 20 are moved or retracted relative to the cylinder housing 11 and the vehicle 80 for example in a car accident. The operation or retraction of the piston rod 40 relative to the cylinder housing 11 will be discussed hereinafter.

One or more cylinders or actuators 50 are attached to the external peripheral portion of the vehicle 80. Each actuator 50 includes a piston rod 51 extending outwards. The piston rod 51 extends outwards from the vehicle 80 for allowing the actuation of the actuators 50 when the vehicle 80 hits or is hit by another object. One or more check valves 52 and one or more relief valves 53 may be coupled to the actuator 50 with one or more hoses 54. The check valve or valves 52 are coupled to one or more inlets 18 of the cylinder housing 11. The inlet or inlets 18 are in communication with the second space 17 of the cylinder housing 11 for supplying pressurized fluid into the second space 17 of the cylinder housing 11 and for retracting the piston rod 40 relative to the cylinder housing 11. The fluid include but not limited to air, any other proper gas or hydraulic oil.

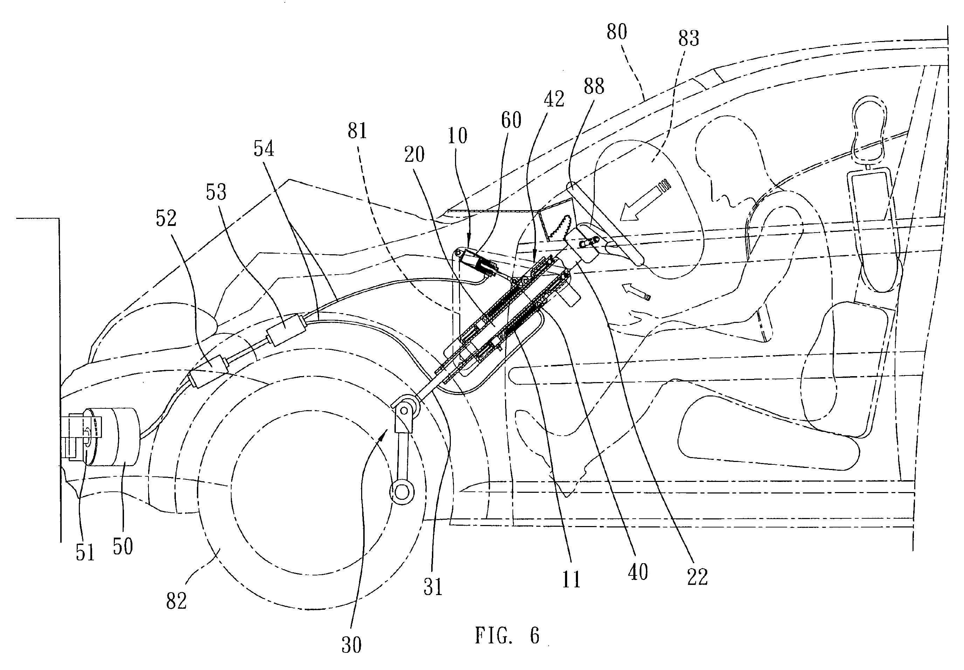

In operation, in a car accident, i.e., when the vehicle 80 hits or is hit by another object, the actuators 50 may be operated to supply the pressurized fluid into the second space of the cylinder housing 11 and thus retract the piston rod 40 relative to the cylinder housing 11. Thus, the steering wheel 88 is retracted relative to the vehicle 80 and moved away from the driver. Accordingly, the distance between the driver and the steering wheel 88 is increased, thus preventing the driver from hitting the steering wheel 88 or cushioning driver in a car accident. The increasing of the distance between the driver and the steering wheel 88 might reduces the force applied to the driver by the air bag 83 (Fig. 6).

A further cylinder or actuating device 60 may be secured to the vehicle 80 such as the frame 81 of the vehicle 80 with a pivot coupler 84 (Fig. 5). The actuating device 60 includes a piston rod 61 coupled to the cylinder housing 11 for further retracting the steering wheel 88 relative to the vehicle 80, away from the driver, thus further increasing the distance between the driver and the steering wheel 88. The latches 47 may be arranged to be selectively released when the piston rod 40 and the steering wheel 88 and the shaft 20 are retracted relative to the cylinder housing 11 and the vehicle 80.

Typical vehicles fail to provide any means for retracting the steering wheel 88 relative to the vehicle 80 and/or the driver such as moving the steering wheel 88 downwards and/or forwards relative to the vehicle 80 and/or the driver for increasing the distance between the driver and the steering wheel 88, thus preventing the driver from quickly hitting the steering wheel 88.

Accordingly, a vehicle may be provided with the steering wheel retracting device in accordance with the present invention for retracting the steering wheel of the vehicle and/or moving the steering wheel away from the driver when the vehicle hits or is hit by another object, thus preventing the driver from hitting the steering wheel in a car accident.

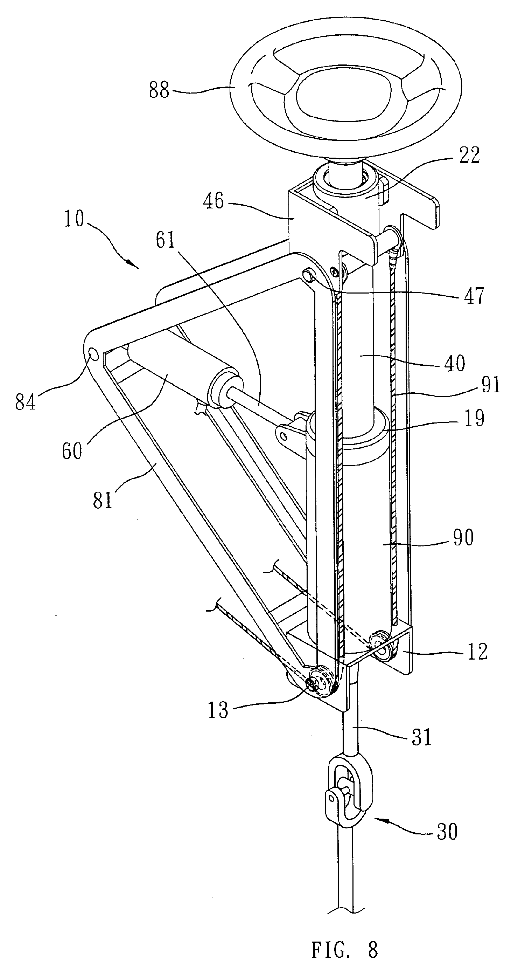

Referring to Fig. 8, a steering wheel retracting device 10 according to a second embodiment of the present invention is shown. The second embodiment is like the first embodiment except several things. Firstly, a sleeve 90 is used instead of the cylinder housing 11. The piston rod 40 is movably inserted through the sleeve 90. Secondly, there are two cables 91 each including an end connected to the upper portion 46 of the piston rod 40 and another end connected to the actuator 50. Each of the cables 91 is wound on a pulley attached to the base element 12. In a car accident, the actuator 50 pulls the cables 91 that in turn lower the piston rod 40 and selectively release the latch 47. The piston rod 40 is lowered relative to the sleeve 90 so that the steering wheel 88 and the shaft 20 are retracted relative to the sleeve 90, away from the driver.

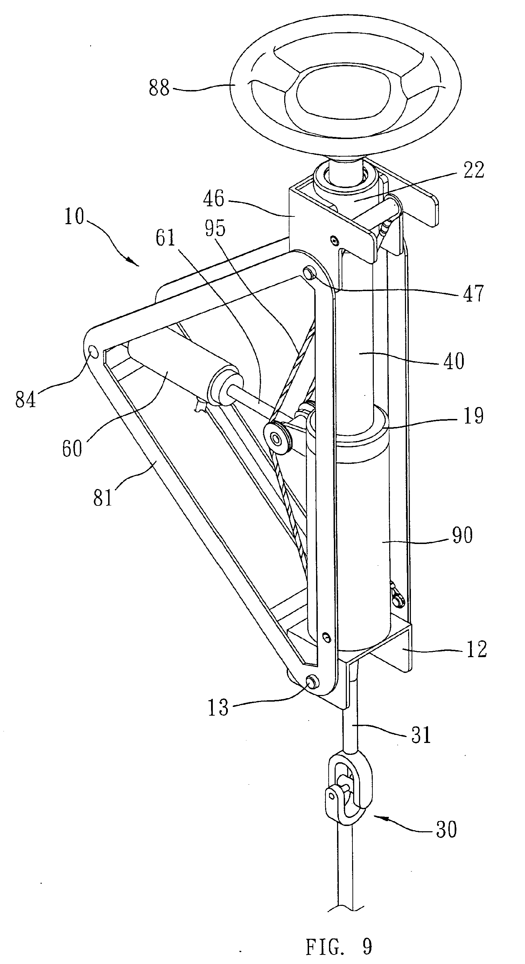

Referring to Fig. 9, a steering wheel retracting device 10 according to a third embodiment of the present invention is shown. The third embodiment is like the second embodiment except only one thing. Firstly, two cables 95 are used instead of the cables 91. Each of the cables 95 includes an upper end connected to the piston rod 40 and a lower end connected to the frame 81. The lower end of each of the cables 95 may be connected to the sleeve 90 or the base element 12 in another embodiment. Secondly, each of the cables 95 is wound around a pulley attached to the piston rod 61.

In a car accident, the actuating device 60 is operated to retract the piston rod 61. The pulleys are moved towards the actuating device 60 so that the piston rod 40 is lowered relative to the sleeve 90, thus releasing the latch 47. Thus, the steering wheel 88 is retracted relative to the sleeve 90 and the vehicle 80, away from the driver.

In the first, second and third embodiments, the operation of the actuator 50 and/or the actuating device 60 may be controlled by a circuit for controlling the inflation of the air bag 83. When the inflation of the air bag 83 begins, the operation of the actuator 50 and/or the actuating device 60 begins.

The present invention has been described via the detailed illustration of the embodiments. Those skilled in the art can derive variations from the embodiments without departing from the scope of the present invention. Therefore, the embodiments shall not limit the scope of the present invention defined in the claims.

## Claims

1. A steering wheel retracting device comprising:
a steering wheel provided in a vehicle; and
means for moving said steering wheel relative to said vehicle to selectively move said steering wheel away from a driver in a car accident.

2. The steering wheel retracting device according to claim 1 wherein said moving means comprises:
a cylinder housing being attached to said vehicle and comprising a chamber defined therein; and
a shaft inserted through said chamber of said cylinder housing and formed with an upper portion attached to said steering wheel.

3. The steering wheel retracting device according to claim 2 comprising a coupling device for coupling said steering wheel to front wheels of said vehicle, wherein said coupling device comprises a link comprising an upper portion connected to said steering wheel and at least one guiding rib formed on said upper portion, and said shaft comprises a bore for receiving said link and at least one guiding formed on the wall of the bore for engagement with said guiding rib of said link so that said link can be rotated by said shaft.

4. The steering wheel retracting device according to claim 2 wherein said moving means comprises:
a piston rod movably mounted on said shaft; and
a piston connected to said piston rod and movably disposed in said chamber of said cylinder housing, thus separating said chamber of said cylinder housing into a first space and a second space; and
an actuator coupled to said second space of said cylinder housing for selectively moving said piston relative to said cylinder housing.

5. The steering wheel retracting device according to claim 4 said actuator is operable to transmit pressurized fluid into said second space of said hydraulic cylinder housing.

6. The steering wheel retracting device according to claim 1 wherein said moving means comprises an actuating device comprising:
a piston rod connected to said hydraulic cylinder housing; and
a frame attached to the vehicle for support said actuating device.

7. The steering wheel retracting device according to claim 1 wherein said moving means comprises:
a sleeve being attached to the vehicle and comprising a chamber defined therein; and
a shaft movably inserted through said sleeve and formed with an upper portion connected to said steering wheel.

8. The steering wheel retracting device according to claim 7 wherein said moving means comprises:
a piston rod for movably receiving said shaft;
a piston connected to said piston rod and movably inserted in said chamber of said sleeve; and
at least one cable for pulling said piston rod downwards relative to said sleeve.
